Europäisches Patentamt

European Patent Office

Office européen des brevets

(19)

(11) **EP 0 847 827 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(51) Int Cl.7: **B23K 35/14**, B23K 35/365, B23K 35/36

(21) Anmeldenummer: **97120789.9**

(22) Anmeldetag: **27.11.1997**

(54) **Flussmittelummantelte, elastische Lotformkörper, bruchfeste Flussmittel- formkörper, Verfahren zu deren Herstellung sowie Verwendung eines Gemisches von Bindemittel und Flussmittel zur Herstellung derselben.**

Flux coated elastic solder formed article, break resistant flux article, methodsfor the preparation thereof and use of a mixture of binder and flux for their preparation.

Corps de forme élastique en métal d'apport recouvert d'un fondant, article de flux incassable, procédés pour leur fabrication et utilisation d'un mélange de liant et de fondant pour leurs préparation.

(84) Benannte Vertragsstaaten:
**AT BE DE ES FR GB IT NL**

(30) Priorität: **10.12.1996 DE 19651220**

(43) Veröffentlichungstag der Anmeldung:
**17.06.1998 Patentblatt 1998/25**

(73) Patentinhaber: **BrazeTec GmbH**
**63457 Hanau (DE)**

(72) Erfinder:
• **Koch, Jürgen, Dr.**
**63165 Mühlheim (DE)**

• **Staab, Leander**
**63776 Mömbris (DE)**

(74) Vertreter: **VOSSIUS & PARTNER**
**Postfach 86 07 67**
**81634 München (DE)**

(56) Entgegenhaltungen:
DE-A- 2 428 808          DE-A- 2 444 521
DE-A- 2 529 190          US-A- 2 684 312

• **PATENT ABSTRACTS OF JAPAN vol. 006, no. 167 (M-153), 31. August 1982 (1982-08-31) & JP 57 081996 A (SUMIKIN YOUSETSUBOU KK;OTHERS: 01), 22. Mai 1982 (1982-05-22)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 847 827 B1

## Beschreibung

Die Erfindung betrifft flußmittelummantelte, elastische Lotformkörper mit einem Flußmittel-Bindemittelgemisch als Flußmittelmantel, wobei der Flußmittelanteil 75 bis 95 Gew.% und der Bindemittelanteil 5 bis 25 Gew.% beträgt, und ein Verfahren zu Herstellung derartiger flußmittelummantelter Lotformkörper. Weiterhin betrifft die Erfindung bestimmte bruchfeste Flußmittelformkörper und ein Verfahren zu deren Herstellung. Des weiteren bezieht sich die Erfindung auf die Verwendung eines speziellen Gemisches aus Bindemittel und Flußmittel zur Herstellung der erwähnten Formkörper.

Zum Verbinden metallischer Werkstücke werden insbesondere beim Flammlöten zusätzlich zu dem Lot auch Flußmittel eingesetzt. Diese haben die Aufgabe, die störenden Oxidschichten der Grundwerkstoffe vor dem Schmelzen des Lotes zu entfernen und die blanken Metalloberflächen vor weiterer Oxidation zu schützen. Pulver- oder pastenförmige Flußmittel werden in der Technik in großen Mengen als Zusatzstoffe beim Löten eingesetzt. In der Regel werden die Flußmittel als Paste oder Suspension durch Sprühen, Pinseln oder Tauchen auf die Werkstücke aufgetragen, anschließend auf Schmelztemperatur erhitzt und durch Zugabe von Lot die Grundmaterialien stoffschlüssig miteinander verbunden. Neben dieser Art der separaten Zuführung von Flußmittel und Lot werden in der Praxis jedoch auch flußmittelbeschichtete Formteile und Lotdrähte verwendet. Solche flußmittelumhüllten Lotdrähte können ohne weitere Zusatzstoffe direkt zum Löten verwendet werden. Beim Ansetzen der Flamme schmilzt zuerst das Flußmittel auf und entfernt die Oxidschichten. Durch weitere Temperaturerhöhung wird auch das Lot schmelzflüssig und verbindet die Fügepartner in bekannter Weise.

Die Herstellung flußmittelummantelter Lotformteile ist schon lange bekannt. Dabei werden plastische Flußmittel-Bindemittelgemische durch Pressen, Extrudieren oder sonstige mechanische Verfahren auf die Lotformteile aufgebracht. Als Bindemittel verwendet man in vielen Fällen organische Polymere, die nach dem Aushärten dem Flußmittelmantel eine gewisse Elastizität verleihen und so die Gefahr des Abplatzens bei Biegebeanspruchungen verringern.

So wird in der DE-OS 23 36 442 ein Flußmittel beschrieben, daß als Bindemittel polymere Methacrylate enthält. Diese organischen Bindemittel haben allerdings den gravierenden Nachteil, daß die beim Lötprozeß entstehenden organischen Zersetzungsprodukte der Bindemittel in der Regel die Wirksamkeit der Flußmittel vermindern und fast immer den Lotfluß beeinträchtigen. Während des Erwärmens verdampfen oder brennen die organischen Hilfsstoffe ab, was zu unerwünschter Rußbildung an der Lötstelle führt und eine Geruchsbelästigung und Gesundheitsgefährdung des Verarbeiters darstellt. Zudem müssen bei Verwendung von organischen Bindemitteln, wie Methacrylate (DE-OS 25 36 442) oder Polyisobutylenen (GB-PS 2 027 617) bei der Herstellung der flußmittelumhüllten Lotformteile vielfach gesundheitsschädliche, brennbare organische Lösemittel (z.B. Methylacetat, Trichlorethylen, Xylol) eingesetzt werden. Diese Lösemittel werden bei dem anschließenden Trocknungsprozeß in die Umgebungsluft emittiert.

Man war daher bestrebt, für solche Flußmittel Gemische einzusetzen, die frei von organischen Bestandteilen sind. So wird in der DE-PS 24 28 808 ein Verfahren zur Herstellung von flußmittelummantelten Lotformkörpern beschrieben, die Alkalitetraborate als Flußmittel enthalten. Solche Flußmittelgemische werden auf 80 bis 250°C erwärmt, das abgekühlte Produkt mit Wasser angeteigt und die plastische Masse auf die Lotformteile aufgebracht, wo sie erhärten. Solche Flußmittelummantelungen haben den Vorteil, daß sie keine organischen Bestandteile enthalten, aber auch den Nachteil, daß sie relativ spröde und damit sehr empfindlich gegen mechanische Beanspruchungen sind. Dies führt dazu, daß bei geringster Biege- oder Schlagbeanspruchung ganze Teile des Flußmittelmantels abplatzen und somit nicht mehr ausreichend Flußmittel für den Lötprozeß zur Verfügung steht.

Die DE OS 25 29 190 beschreibt eine organikfreie Flußmittelummantelung, wobei durch Zusatz von Glas- bzw. Metallfasern zur Flußmittelmischung eine höhere Elastizität erreicht werden soll. Zur Erzielung guter Biegefestigkeiten müssen dem Flußmittel jedoch größere Mengen Glasfasern zugesetzt werden. Bedingt durch das inhomogene Aufschmelzen der Flußmittelkomponenten steigt hierbei jedoch die Gefahr einer unerwünschten Veränderung der Flußmittelwirkung. Zwar wird in dieser Schrift auch vorgeschlagen, Fasern in der Zusammensetzung des Flußmittels zu verwenden, doch sind solche kaum herstellbar.

Weiterhin ist die Prozeßsicherheit bei der Produktion dieser flußmittelumhüllten Lotdrähte geringer als bei feingemahlenem Preßgut, da die langen Fasern sehr leicht die Extrusionsdüsen verstopfen und somit der Ummantelungsprozeß gestört wird.

In der DE-OS 23 36 442 wird auch die Verwendung löslicher Silikate (Wassglas) angesprochen, doch sind diese nach dem Aushärten ebenfalls spröde.

Die US-A-2 684 312 beschreibt Flußmittel aus Borax und Borsäure, sowie gegebenenfalls Alkalifluorid, die eine kleine Menge wasserlöslicher Silikate als Bindemittel enthalten können.

Es war daher Aufgabe der vorliegenden Erfindung, ein Bindemittel für flußmittelummantelte, elastische Lotformkörper mit einem Flußmittel-Bindemittelgemisch als Flußmittelmantel zu entwickeln, wobei der Flußmittelanteil bestehend aus Mischungen von Boraten und komplexen Fluoriden, 75 bis 95 Gew.% und der Bindemittelanteil 5 bis 25 Gew.% betragen, das Gemisch frei von organischen Stoffen und der ausgehärtete Flußmittelmantel elastisch und gegen mechanische Verformungen unempfindlich sein sollte. Außerdem sollte ein Verfahren entwickelt werden, um solche flußmittelummantelte Lotformkörper herzustellen, wobei ein derartiges Flußmittel-Bindemittelgemisch im plastischen Zustand auf den Lotformkörper aufgebracht wird.

Diese Aufgabe wird erfindungsgemäß dadurch gelöst, daß das Bindemittel aus 35 bis 90 Gew.% Kaliumsilikat mit einem molaren $K_2O:SiO_2$-Verhältnis von 1:2,5 bis 1:4,5, 1,5 bis 30 Gew.% Phosphorsäure, 0,1 bis 5 Gew.% Borsäure und 0 bis 30 Gew.% feinverteiltem Siliziumdioxid besteht.

Die flußmittelummantelten, elastischen Lotformteile werden durch Aufbringen eines Flußmittel-Bindemittelgemisches im plastischen Zustand auf die Lotformteile und anschließendes Aushärten bei 20 bis 100°C hergestellt, wobei der Flußmittelanteil 75 bis 95 Gew.% und der Bindemittelanteil 5 bis 25 Gew.% beträgt, indem als Bindemittel dem Flußmittel ein Gemisch von 5 bis 30 Gew.% Kaliumsilikat mit einem molaren $K_2O:SiO_2$-Verhältnis von 1:2,5 bis 1:4,5 in Form von Kaliwasserglas, 0,5 bis 10 Gew.% konzentrierte Phosphorsäure, 0,1 bis 5 Gew.% Borsäure und 0 bis 10 Gew.% feinverteiltes Siliziumdioxid, Rest Wasser, zugesetzt, und das Flußmittel-Bindemittelgemisch in einem Rührwerk durch Zugabe von Wasser zu einer klumpenförmigen Konsistenz gebracht wird.

Überraschenderweise hat es sich gezeigt, daß sich durch Verwendung eines anorganischen Bindemittels, bestehend aus einer wässrigen Lösung von Kaliumsilikat in einer wässrigen Mischung von Phosphorsäure und Borsäure, die Stabilität und Elastizität der Flußmittelummantelung durch Variation des Phosphorsäure/Borsäure-Verhältnisses in weiten Grenzen einstellen läßt. Im Gegensatz zu den bekannten harten und sehr spröden Flußmittelmänteln auf rein anorganischer Basis kann durch geeignete Wahl des Mischungsverhältnisses von Phosphorsäure und Borsäure die Härte und Flexibilität des Flußmittelmantels dem jeweiligen Anwendungsfall angepaßt werden. Mit sinkendem Gehalt an Borsäure werden hierbei die Flußmittelumhüllungen härter und weniger flexibel, während bei Erhöhung der Borsäurekonzentration der Flußmittelmantel weicher wird. Das Verhältnis von Phosphorsäure zu Kaliumsilikat wird so gewählt, daß die alkalisch reagierende Silikatlösung vor Zugabe der Borsäure bereits weitgehend neutralisiert ist. Anschließend wird die gewünschte Menge Borsäure in der Bindemittelmischung gelöst.

Vorzugsweise besteht das Bindemittel aus einer Mischung von 3-6% einer 85%igen Phosphorsäure, 50-70% einer 30%igen Kaliumsilikatlösung und 0,1-2% fester Borsäure im restlichen Wasser. Das Flußmittel besteht vorzugsweise aus einer Mischung von Boraten und komplexen Alkalifluoriden und ist in der fertigen Ummantelungsmasse zu 75-95% enthalten.

Obwohl viele Flußmittel bereits Borverbindungen in Form von Boraten enthalten, haben diese keinerlei positiven Einfluß auf die Elastizität der Ummantelung. Ein solcher Effekt ist nur mit Borsäure erreichbar.

Das Verfahren zur Herstellung dieser neuen Flußmittelummantelungsmasse ist erfindungsgemäß dadurch gekennzeichnet, daß die Flußmittelmischung innig vermischt und mit der wässrigen Bindemittellösung aus Kaliumsilikat (Kaliwasserglas),Phosphorsäure und Borsäure in einem Rührwerk homogenisiert wird. Die optimale Konsistenz der Mischung wird durch sukzessive Zugabe kleinerer Mengen Wasser eingestellt und ist erreicht, wenn die Mischung beim Rühren kugelförmige Klumpen bildet und nicht mehr an der Wand haftet. Durch Zugabe von vorzugsweise 0,2-0,9 % feinstverteilter Kieselsäure (Aerosil) kann das Misch- und Homogenisierungsergebnis verbessert werden. Nach dem Anteigen wird die plastische Masse gepreßt und nach bekannten Verfahren, beispielsweise Extrudieren, auf Formteile, wie Stäbe oder Ringe aufgebracht. Auf gleiche Weise lassen sich auch stabile Formkörper aus diesen Flußmittelmischungen herstellen.

Das Aushärten der aufgebrachten Flußmittelüberzüge oder Formkörper erfolgt innerhalb weniger Stunden an Luft oder beschleunigt in Trockenöfen.

Die folgenden Beispiele sollen die Erfindung näher erläutern:

1. Als Ummantelungsmasse wird folgende Mischung hergestellt:

| | |
|---|---|
| 90,4 % | Feingemahlenes Hartlötflußmittel (<50 μm) |
| 5,6 % | Kaliwasserglaslösung 30%ig ($K_2O:SiO_2$=1:4,08) |
| 0,5 % | feinverteiltes Siliziumdioxid (Aerosil 200) |
| 0,4 % | Phosphorsäure (85%ig) |
| 0,1 % | Borsäure |
| 3,0 % | Wasser |
| 100 % | |

Als Hartlötflußmitel wird ein Gemisch von Boraten und komplexen Fluoriden eingesetzt, wie sie aus dem Stand der Technik bekannt sind.

Das Hartlötflußmittel wird in einem Mischer vorgelegt, mit Aerosil versetzt und unter Rühren langsam mit der wässrigen Lösung von Kaliumsilikat, Phosphorsäure und Borsäure homogenisiert. Nach beendeter Zugabe wird solange weitergemischt, bis sich die Ummantelungsmasse von der Wand des Rühraggregates löst und runde Kugeln bildet. Die Masse befindet sich jetzt in einem plastischen Zustand und wird nach dem Herstellen eines Preßlings auf einer handelsüblichen Extrusionsanlage auf 1,5 mm dicke Hartlotstäbe der Legierungszusammensetzung Ag55Cu21Zn22Sn2 aufgebracht. Der Aushärte- bzw. Trockenvorgang ist nach 8 h bei Raumtemperatur abgeschlossen. Die so mit Flußmittel ummantelten Hartlotstäbe zeigen eine ausgezeichnete Stabilität gegenüber mechanischer Beanspruchung. Sie lassen sich, ohne daß das Flußmittel abplatzt, bis zu einem Winkel von 90° verbiegen und sind praktisch unempfindlich gegen Schlag- oder Stoßbelastung.

Da bei der Herstellung der erfindungsgemäßen Ummantelungsmasse konsequent auf organische Lösemittel oder Polymere verzichtet wurde, tritt beim Löten keine Geruchsbelästigung oder Rauch- und Rußbildung auf.

Das Lötergebnis beim T-Stoßlöten zeigt eine gut ausgebildete Lotnaht, da der Lotfluß nicht durch Zersetzungsprodukte des Bindemittels gestört wird.

2. Als Ummantelungsmasse wird folgende Mischung hergestellt (Vergleichsbeispiel) :

| 50,0 % | Kaliumtetrafluoroborat } als Flußmittel |
|---|---|
| 41,0 % | Kaliumtetraborat } |
| 6,2 % | Kaliwasserglas (33%ig) $K_2O:SiO_2$ = 3,59 |
| 0,7% | Aerosil COK 84 |
| 0,5 % | Phosphorsäure (85%ig) |
| 1,6 % | Wasser |
| 100 % | |

Die Flußmittelmasse wird wie in Beispiel 1 aus den feingemahlenen Flußmittelkomponenten und Hilfsstoffen durch Zugabe des wässrigen Bindemittels in einem Mischer hergestellt und in üblicher Weise auf Hartlotstäbe aufgebracht oder zu Formteilen verarbeitet. Der Flußmittelmantel ist durch das Fehlen der Borsäure relativ hart und spröde und läßt daher nur geringe Verformungen des Lotstabes zu. Die Haftung am Lotstab ist jedoch ausgezeichnet.

Die Flußmittelmasse kann auch mit einer Tablettiermaschine in die gewünschte Form gebracht oder zu einer 0,5-1 mm dicken Schicht ausgewalzt und an der Luft getrocknet werden. Nach dem Aushärten kann die Masse zu kleinen Blättchen zerschnitten werden, die eine hohe Bruchfestigkeit aufweisen und als Flußmittelformteil zum Löten mit Silberhartloten in den verschiedensten Lötprozessen, wie Flammlöten, HF-Löten oder Ofenlöten eingesetzt werden können.

## Patentansprüche

1. Flußmittelummantelter, elastischer Lotformkörper mit einem Flußmittel-Bindemittelgemisch als Flußmittelmantel, wobei der Flußmittelanteil, bestehend aus einer Mischung eines Borats und eines komplexen Fluorids, 75 bis 95 Gew.% und der Bindemittelanteil 5 bis 25 Gew.% beträgt,
   **dadurch gekennzeichnet ,**
   **daß** das Bindemittel aus 35 bis 90 Gew.% Kaliumsilikat mit einem molaren $K_2O:SiO_2$-Verhältnis von 1:2,5 bis 1: 4,5, 1,5 bis 30 Gew.% Phosphorsäure, 0,1 bis 5 Gew.% Borsäure und 0 bis 30 Gew.% feinverteiltem Siliziumdioxid besteht.

2. Verfahren zur Herstellung eines flußmittelummanteltern, elastischen Lotformkörpers nach Anspruch 1 durch Aufbringen eines Flußmittel-Bindemittelgemisches im plastischen Zustand auf den Lotformkörper und anschließendes Aushärten bei 20 bis 100°C,
   **dadurch gekennzeichnet,**
   **daß** als Bindemittel dem Flußmittel, bestehend aus einer Mischung eines Borats und eines komplexen Fluorids, ein Gemisch von 5 bis 30 Gew.% Kaliumsilikat mit einem molaren $K_2O:SiO_2$-Verhältnis von 1:2,5 bis 1:4,5 in Form von Kaliwasserglas, 0,5 bis 10 Gew.% konzentrierte Phosphorsäure, 0,1 bis 5 Gew.% Borsäure und 0 bis 10 Gew. % feinverteiltes Siliziumdioxid, sowie als Rest Wasser zugesetzt und das Flußmittel-Bindemittelgemisch in einem Rührwerk durch Zugabe von Wasser zu einer klumpenförmigen Konsistenz gebracht wird.

3. Bruchfester Flußmittelformkörper bestehend aus einem Flußmittel-Bindemittelgemisch wobei der Flußmittelanteil, bestehend aus einer Mischung eines Borats und eines komplexen Fluorids, 75 bis 95 Gew.% und der Bindemittelanteil 5 bis 25 Gew.% beträgt,
   **dadurch gekennzeichnet,**

**daß** das Bindemittel aus 35 bis 90 Gew.% Kaliumsilikat mit einem molaren $K_2O:SiO_2$-Verhältnis von 1:2,5 bis 1:4,5, 1,5 bis 30 Gew.% Phosphorsäure, 0,1 bis 5 Gew.% Borsäure und 0 bis 30 Gew.% feinverteilten Siliziumdioxid besteht.

4. Verfahren zur Herstellung eines bruchfesten Flußmittelformkörpers durch Formgebung eines Flußmittel-Bindemittelgemisches und anschließendes Aushärten bei 20 bis 100°C,
**dadurch gekennzeichnet,**
**daß** als Bindemittel dem Flußmittel, bestehend aus einer Mischung eines Borats und eines komplexen Fluorids, ein Gemisch von 5 bis 30 Gew.% Kaliumsilikat mit einem molaren $K_2O:SiO_2$-Verhältnis von 1:2,5 bis 1:4,5 in Form von Kaliwasserglas, 0,5 bis 10 Gew.% konzentrierte Phosphorsäure, 0,1 bis 5 Gew.% Borsäure und 0 bis 10 Gew.% feinverteiltes Siliziumdioxid, sowie als Rest Wasser zugesetzt und das Flußmittel-Bindemittelgemisch in einem Rührwerk durch Zugabe von Wasser zu einer klumpenförmigen Konsistenz gebracht wird.

5. Verwendung eines Gemisches aus 35 bis 90 Gew.% Kaliumsilikat mit einem molaren $K_2O:SiO_2$-Verhältnis von 1:2,5 bis 1:4,5, 1,5 bis 30 Gew.% Phosphorsäure, 0,1 bis 5 Gew.% Borsäure und 0 bis 30 Gew.% feinverteiltes Siliziumdioxid als Bindemittel in Gemisch mit einem Flußmittel zur Herstellung eines flußmittelummantelten, elastischen Lotformkörpers oder eines bruchfesten Flußmittelformkörpers.

**Claims**

1. Flux coated elastic solder formed article having as the flux coating a flux-binder mixture, wherein the proportion of flux, consisting of a mixture of a borate and a complex fluoride, is from 75 to 95 wt.% and the proportion of binder is from 5 to 25 wt.%, **characterised in that** the binder consists of from 35 to 90 wt.% potassium silicate having a molar ratio of $K_2O: SiO_2$ of from 1 : 2.5 to 1 : 4.5, from 1.5 to 30 wt.% phosphoric acid, from 0.1 to 5 wt.% boric acid and from 0 to 30 wt.% finely divided silicon dioxide.

2. Process for the preparation of a flux coated elastic solder formed article according to claim 1 by applying to the solder formed article, a flux-binder mixture in the plastic state, followed by hardening at from 20 to 100°C, **characterized in that** as the binder, a mixture of from 5 to 30 wt. % potassium silicate having a molar ratio of $K_2O : SiO_2$ of from 1 : 2.5 to 1 : 4.5 in the form of potassium water glass, from 0.5 to 10 wt.% concentrated phosphoric acid, from 0.1 to 5 wt.% boric acid and from 0 to 10 wt.% finely divided silicon dioxide, with the remainder water, is added to the flux, consisting of a mixture of a borate and a complex fluoride, and the flux-binder mixture is brought to a lumpy consistency by the addition of water in a stirring device.

3. Break resistant flux formed article consisting of a flux-binder mixture, wherein the proportion of flux, consisting of a mixture of a borate and a complex fluoride, is from 75 to 95 wt.% and the proportion of binder is from 5 to 25 wt.%, **characterized in that** the binder consists of from 35 to 90 wt.% potassium silicate having a molar ratio of $K_2O : SiO_2$ of from 1 : 2.5 to 1 : 4.5, from 1.5 to 30 wt.% phosphoric acid, from 0.1 to 5 wt.% boric acid and from 0 to 30 wt.% finely divided silicon dioxide.

4. Process for the preparation of a break resistant flux formed article by shaping a flux-binder mixture, followed by hardening at from 20 to 100°C, **characterised in that** as the binder, a mixture of from 5 to 30 wt.% potassium silicate having a molar ratio of $K_2O : SiO_2$ of from 1 : 2.5 to 1 : 4.5 in the form of potassium water glass, from 0.5 to 10 wt. % concentrated phosphoric acid, from 0.1 to 5 wt.% boric acid and from 0 to 10 wt.% finely divided silicon dioxide, with the remainder water, is added to the flux, consisting of a mixture of a borate and a complex fluoride, and the flux-binder mixture is brought to a lumpy consistency by the addition of water in a stirring device.

5. Use of a mixture of from 35 to 90 wt.% potassium silicate having a molar ratio of $K_2O : SiO_2$ of from 1 : 2.5 to 1 : 4.5, from 1.5 to 30 wt.% phosphoric acid, from 0.1 to 5 wt.% boric acid and from 0 to 30 wt.% finely divided silicon dioxide as a binder in admixture with a flux for the preparation of a flux coated, elastic solder formed article or a break resistant flux formed article.

**Revendications**

1. Corps de forme élastique en métal d'apport recouvert d'un fondant comprenant un mélange de fondant et de liant sous forme de revêtement fondant, dans lequel la part de fondant, composé d'un mélange d'un borate et d'un fluorure complexe, est de 75 à 95 % en poids et la part de liant de 5 à 25 % en poids,
**caractérisé en ce que**
le liant est composé de 35 à 90 % en poids de silicate de potassium avec un rapport molaire $K_2O:SiO_2$ de 1:2,5 à 1:4,5, de 1,5 à 30 % en poids d'acide phosphorique, de 0,1 à 5 % en poids d'acide borique et de 0 à 30 % en poids de dioxyde de silicium finement divisé.

2. Procédé de fabrication d'un corps de forme élastique en métal d'apport recouvert d'un fondant, consistant à déposer un mélange de fondant et de liant à l'état plastique sur le corps de forme en métal d'apport puis à le durcir à une température de 20 à 100°C,
**caractérisé en ce que**
comme liant, on ajoute à un fondant, composé d'un mélange d'un borate et d'un fluorure complexe, un mélange de 5 à 30 % en poids de silicate de potassium avec un rapport molaire $K_2O:SiO_2$ de 1:2,5 à 1:4,5 sous la forme de silicate alcalin de potassium, de 0,5 à 10 % en poids d'acide phosphorique concentré, de 0,1 à 5 % en poids d'acide borique et de 0 à 10 % en poids de dioxyde de silicium finement divisé, ainsi que d'eau comme reste, et le mélange de liant-fondant est déposé dans un mélangeur-agitateur en ajoutant de l'eau afin d'obtenir une consistance sous forme de grumeaux.

3. Corps de forme fondant résistant à la rupture composé d'un mélange de liant-fondant dans lequel la part de fondant, composé d'un mélange d'un borate et d'un fluorure complexe, est de 75 à 95 % en poids, et la part de liant de 5 à 25 % en poids,
**caractérisé en ce que**
le liant comprend 35 à 90 % en poids de silicate de potassium avec un rapport molaire $K_2O:SiO_2$ de 1:2,5 à 1:4,5, de 1,5 à 30 % en poids d'acide phosphorique, de 0,1 à 5 % en poids d'acide borique et de 0 à 30 % en poids de dioxyde de silicium finement divisé.

4. Procédé de fabrication d'un corps de forme fondant, résistant à la rupture, consistant à former un mélange de fondant et de liant puis à le durcir à une température de 20 à 100°C,
**caractérisé en ce que**
comme liant, on ajoute à un fondant, composé d'un mélange d'un borate et d'un fluorure complexe, un mélange de 5 à 30 % en poids de silicate de potassium avec un rapport molaire $K_2O:SiO_2$ de 1:2,5 à 1:4,5 sous la forme de silicate alcalin de potassium, de 0,5 à 10 % en poids d'acide phosphorique concentré, de 0,1 à 5 % en poids d'acide borique et de 0 à 10 % en poids de dioxyde de silicium finement divisé, ainsi que d'eau comme reste, et le mélange de liant-fondant est déposé dans un mélangeur-agitateur en ajoutant de l'eau afin d'obtenir une consistance sous forme de grumeaux.

5. Utilisation d'un mélange de 35 à 90 % en poids de silicate de potassium avec un rapport molaire $K_2O:SiO_2$ de 1:2,5 à 1:4,5, de 1,5 à 30 % en poids d'acide phosphorique, de 0,1 à 5 % en poids d'acide borique et de 0 à 30 % en poids de dioxyde de silicium finement divisé comme liant dans un mélange avec un fondant pour fabriquer d'un corps de forme élastique en métal d'apport recouvert d'un fondant et d'un corps de forme fondant résistant à la rupture.